# EUROPÄISCHE PATENTSCHRIFT

(11) **EP 3 855 054 B1**
(45) Veröffentlichungstag und Bekanntmachung des Hinweises auf die Patenterteilung: **14.06.2023**
(21) Anmeldenummer: 21152075.4
(22) Anmeldetag: 18.01.2021
(51) Int. Cl.: F16K 27/00, F16K 11/16, F16K 31/524, F16K 31/53, A47J 31/46

(54) **MEHRWEGVENTIL FÜR FLUID FÜR EINE GETRÄNKEZUBEREITUNGSVORRICHTUNG, MEHRFLUID-MEHRWEGVENTIL FÜR EINE GETRÄNKEZUBEREITUNGSVORRICHTUNG UND GETRÄNKEZUBEREITUNGSVORRICHTUNG, INSBESONDERE KAFFEEMASCHINE**
MULTIWAY VALVE FOR FLUID FOR A DRINK PREPARATION DEVICE, MULTI-FLUID MULTIWAY VALVE FOR A DRINK PREPARATION DEVICE AND DRINK PREPARATION DEVICE, IN PARTICULAR COFFEE MACHINE
SOUPAPE À VOIES MULTIPLES POUR UN FLUIDE POUR UN DISPOSITIF DE PRÉPARATION DE BOISSON, SOUPAPE À FLUIDES MULTIPLES À VOIES MULTIPLES POUR UN DISPOSITIF DE PRÉPARATION DE BOISSON ET DISPOSITIF DE PRÉPARATION DE BOISSON, EN PARTICULIER MACHINE À CAFÉ

(30) Priorität: 23.01.2020 DE 102020101617
(43) Veröffentlichungstag der Anmeldung: 28.07.2021
(73) Patentinhaber: Eugster/Frismag AG, 8580 Amriswil (CH)
(72) Erfinder: RIESSBECK, Wolfgang, 8597 Landschlacht (CH); VAN DE LÖCHT, Hendrik, 8586 Riedt bei Erlen (CH); DECKERT, Maximilian, 78234 Engen (DE); RAMSEIER, Samuel, 8580 Amriswil (CH); BURKART, Olaf, 8580 Amriswil (CH)
(74) Vertreter: Patent- und Rechtsanwälte Behrmann Wagner PartG mbB

(56) Entgegenhaltungen:
- EP-A1- 3 067 628
- WO-A1-2018/077348
- CN-A- 103 672 037
- DE-A1-102016 216 044
- US-A- 3 455 335
- US-A1- 2015 041 007
- US-A1- 2016 263 605

## Beschreibung

Die vorliegende Erfindung betrifft ein Mehrwegventil für Fluid, insbesondere Wasser und/oder Wasserdampf, für eine Getränkezubereitungsvorrichtung, insbesondere eine Kaffeemaschine. Die vorliegende Erfindung betrifft ferner ein Mehrfluid-Mehrwegventil für eine Getränkezubereitungsvorrichtung, insbesondere eine Kaffeemaschine. Weiterhin betrifft die vorliegende Erfindung eine Getränkezubereitungsvorrichtung, insbesondere eine Kaffeemaschine mit einem entsprechenden Mehrwegventil und/oder einem Mehrfluid-Mehrwegventil.

In den verschiedenen Bereichen von Getränkezubereitungsvorrichtungen, insbesondere Getränkeautomaten, besonders bevorzugt Kaffeemaschinen, sind in der Regel verschiedene Medien, insbesondere verschiedene Fluide zu handhaben und/oder zu steuern. In einer Vielzahl der Fälle handelt es sich bei den Medien oder Fluiden um Heißwasser, Kaltwasser, Wasserdampf und/oder Reinigungsfluid. Da die jeweiligen Fluide in den Getränkezubereitungsvorrichtungen unterschiedlichen Baugruppen, Verbrauchern und/oder Abgabe- sowie Ausgabestellen zur Verfügung gestellt werden müssen, bedarf es einer entsprechend komplexen Regelung der Fluidströme, um einerseits die Fluide zuverlässig und mit den gewünschten Eigenschaften, beispielsweise Druck, Temperatur und Flussrate oder Volumen an den jeweiligen Baugruppen oder Stellen der Vorrichtung zur Verfügung zu stellen und gleichzeitig den Aufwand dazu, insbesondere die entsprechend vorzusehenden Pumpen oder vergleichbare Fördereinrichtungen in einem vertretbaren und wirtschaftlichen Rahmen zu halten.

Zu diesem Zweck haben sich im Stand der Technik Mehrwegventile etabliert, bei denen ein entsprechendes Fluid an einem Fluideingang bereitgestellt wird oder mittels einer Pumpe oder sonstigen Fördereinrichtung einem Fluideingang zugeführt wird und dann über eine Vielzahl gesteuerter oder steuerbaren Ventilauslässe den entsprechenden Verbrauchern, Baugruppen oder Ausgabestellen gesteuert zur Verfügung gestellt werden. Dabei hat sich in der Vergangenheit der Trend durchgesetzt, dass für die jeweilige Getränkezubereitungsvorrichtung, also für den jeweiligen Getränkeautomaten oder die entsprechende Kaffeemaschine das jeweils benötigte Mehrwegventil zur Steuerung eines Fluids individuell entwickelt oder zumindest individuell ausgelegt wird. Auf der Grundlage dieses Ansatzes sind eine Vielzahl von unterschiedlichen Konstruktionskonzepten bekannt. Darunter fallen u.a. die DE 10 2007 056 712 A1, die EP 2 778 528 B1, die DE 10 2008 001 520 A1 sowie die DE 10 2016 216 045 A1.

All den vorangehend genannten Konzepten aus dem Stand der Technik ist gemein, dass eine Anpassung des Mehrwegventils an eine geänderte oder anpasste Funktionalität oder Aufgabe nur unter verhältnismäßig großem Aufwand und insbesondere unter wesentlicher konstruktiver Änderung möglich ist, sodass einerseits der Aufwand zur Anpassung oder Überarbeitung der Mehrwegventile besonders groß und darüber hinaus auch im Hinblick auf die zu verwendenden Einzelteile oder Baugruppen keinerlei Standardisierung und nur in äußerst geringem Maße eine Verwendung von Gleichteilen oder eine erneute Verwendung von bereits konstruierten und ggf. bereits gefertigten Gleichteilen oder Gleich-Baugruppen möglich ist.

Weiterhin haben die bekannten Mehrwegventile oftmals den Nachteil, dass sie, wie oben bereits erwähnt, spezifisch für die Verwendung oder spezifisch für den Gebrauch in einer Getränkezubereitungsvorrichtung, bevorzugt in einem Getränkeautomaten oder einer Kaffeemaschine, konstruiert sind und dementsprechend zwar an eine individuelle Einbausituation oder an eine individuelle Raumgegebenheit angepasst sind, dass diese Einbausituation sich jedoch nicht auf eine leicht geänderte oder sogar grundlegend überarbeitete andere Getränkezubereitungsvorrichtung übertragen lässt, sodass entweder bei dem Versuch ein bekanntes oder vorhandenes Mehrwegventil in eine neue oder geänderte Getränkezubereitungsvorrichtung zu integrieren wertvoller Bauraum oder wertvolles Volumen verloren geht, ungenutzt bleibt oder zur Vermeidung eines derartigen Volumenverlustes abermals eine Überarbeitung der Konstruktion oder zumindest eine Anpassung der Gesamtkonstruktion erforderlich ist, was dann wiederum zu den oben bereits genannten Nachteilen im Hinblick auf Standardisierung und Skaleneffekte führt.

Die CN 103 672 037 A offenbart ein Mehrwegventil für ein durch Wasser ausgebildetes Fluid mit einem Fluideingang und einer Vielzahl von gesteuerten Fluidauslässen, wobei das Mehrwegventil zwei modulare Ventilsegmenten mit jeweils einem Fluideinlass, wenigstens einem Fluidauslass und einer einen Fluidauslass steuernden Ventilstelleinrichtung umfasst. Zudem sind die modularen Ventilsegmente so miteinander verbunden sind, dass durch einen Fluidauslass eines ersten Ventilsegments und einen Fluideinlass eines unmittelbar benachbarten zweiten Ventilsegments eine Ventilhauptleitung ausgebildet wird, die fluidleitend mit dem Fluideingang des Ventils verbunden ist. Weiterhin wird eine gemeinsame Ansteuereinrichtung offenbart.

Die US 2016/263605 A1 offenbart im Rahmen einer Sprühvorrichtung ein Mehrwegventil für ein flüssiges Beschichtungsprodukt. Das Mehrwegventil wird durch mehrere Ventilsegmente gebildet, die jeweils einen Fluideinlass, einen Fluidauslass sowie eine Ventilstelleinrichtung umfassen. Ferner bilden die Ventilsegmente auch eine Ventilhauptleitung aus, die mit dem Fluideingang des Ventils fluidleitend gekoppelt ist.

Die EP 3 067 628 A1 offenbart einen modular aufgebauten hydraulischen Verteiler zum Transport von Wasser für die Verwendung in einer hydraulischen Heizungs- und/oder Kühlanlage. In diesem Zusammenhang wird ein durch Ventilsegmente modular aufgebautes Ventil mit einem Fluideingang und einer Vielzahl von Fluidauslässen offenbart. Das die Ventilsegmente ausbildende Lastmodul umfasst ferner auch eine Ventilstelleinrichtung zum fluidleitenden Steuern der Fluidauslässe. US2015041007 offenbart auch ein Mehrwegventil.

Vor dem Hintergrund dieses Stands der Technik ist es die Aufgabe der vorliegenden Erfindung die bekannten Mehrwegventile weiterzuentwickeln und darüber hinaus ein Mehrfluid-Mehrwegventil vorzuschlagen, die über eine entsprechende Standardisierung von Komponenten und Baugruppen einerseits eine fast beliebig komplexe Realisierung von Mehrwegventilen erlaubt, gleichzeitig jedoch mit einer Mindestanzahl oder mit einem Mindestmaß an unterschiedlichen Teilen oder Komponenten auskommt.

Gelöst wird diese Aufgabe durch ein Mehrwegventil für Fluid oder Fluide für eine Getränkezubereitungsvorrichtung mit den Merkmalen des Anspruchs 1. Weiterhin wird diese Aufgabe im Hinblick auf ein Mehrfluid-Mehrwegventil für eine Getränkezubereitungsvorrichtung mit den Merkmalen des Anspruchs 15 gelöst. Schließlich wird die vorliegende Erfindung auch durch eine Getränkezubereitungsvorrichtung, insbesondere eine Kaffeemaschine mit den Merkmalen des Anspruchs 16 gelöst. Vorteilhafte Ausführungsformen sind Gegenstand der Unteransprüche.

In Bezug auf das Mehrwegventil für Fluid, insbesondere für Wasser und/oder Wasserdampf, für eine Getränkezubereitungsvorrichtung, insbesondere eine Kaffeemaschine mit einem als Fluideingang ausgebildeten Fluidöffnung für das, beispielsweise von einer Pumpe oder sonstigen Fördereinrichtung zur Verfügung gestellten Fluid und eine Vielzahl von als gesteuerte Fluidauslässe ausgebildeten Fluidöffnungen für das Fluid wird die erfindungsgemäße Aufgabe dadurch gelöst, dass eine Vielzahl von modularen Ventilsegmenten vorgesehen wird, die jeweils einen Fluideinlass und zumindest einen Fluidauslass und eine zumindest einen Fluidauslass steuernde Ventilstelleinrichtung aufweisen, wobei die Ventilstelleinrichtungen von einer mechanischen Ansteuerungseinheit zwischen zumindest einer Öffnungsposition und zumindest einer Verschlussposition verstellbar sind und bevorzugt in einem Ventilsegmentgehäuse angeordnet sind und wobei die modularen Ventilsegmente, insbesondere auch die Ventilsegmentgehäuse, derart miteinander verbunden sind, dass durch jeweils einen Fluidauslass eines Ventilsegments und einem Fluideingang eines nachfolgenden oder benachbarten Ventilsegments eine sich an den Fluideingang des Ventils anschließende Ventilhauptleitung ausgebildet wird.

Der erfindungsgemäße Grundgedanke sieht also vor, dass zumindest für die Ventilsegmente ein Baukastenprinzip realisiert wird, bei dem sich unter Verwendung von sehr wenigen unterschiedlichen Ventilsegmentbauformen unterschiedlich komplexe Mehrwegventile realisieren, insbesondere durch eine Nebeneinanderanordnung der Ventilsegmente unter Ausbildung einer Verbindung der Ventilsegmente über die Fluidauslässe und Fluideinlässe kombinieren lassen und dabei im Ergebnis durch die Verbindung der Ventilsegmente untereinander oder miteinander trotzdem ein gemeinsames oder einheitliches Mehrwegventil realisiert wird, was eine Vielzahl weiterer Vorteile ermöglicht, auf die u.a. auch im Rahmen der Untersprüche noch eingegangen werden wird.

Die erfindungsgemäße vorgesehene Anordnung oder Verbindung der modularen Ventilsegmente, insbesondere auch der Ventilsegmentgehäuse ist dabei derart zu verstehen, dass die jeweilige Verbindung eines Fluidauslasses mit einem Fluideinlass eines nachfolgenden Ventilsegments nur für das erste bis resp. vorletzte (N-1) Ventilsegment zutrifft. Das letzte erfindungsgemäß gekoppelte Ventilsegment, welches naturgemäß kein nachfolgendes Ventilsegment mehr aufweist bildet logischerweise keine entsprechende Verbindung aus.

In einem idealen Fall kann beispielsweise mit einem einzigen, standardisierten modularen Ventilsegment ausgekommen werden und trotzdem beliebig komplexe Mehrwegventile realisiert werden. Wie nachfolgend noch näher beschrieben werden wird, kann es jedoch auch vorteilhaft sein, wenn zwei oder drei unterschiedliche modulare Ventilsegmente realisiert sind. Besonders vorteilhaft ist es jedoch in jedem Fall, wenn die modularen Ventilsegmente, beispielsweise jeweils auf ein Fluid abgestimmt, ansonsten weitestgehend identisch ausgeführt sind. Insbesondere kann es besonders vorteilhaft sein, wenn die jeweils zum Einsatz kommenden Ventilstelleinrichtungen, die mechanischen Ansteuerungseinheiten und/oder die Ventilsegmentgehäuse vollständig oder weitgehend identisch oder standardisiert ausgebildet sind. Denn dadurch wird insgesamt die Anzahl an benötigten Teilen oder Baugruppen zur Realisierung des Mehrwegventils erheblich reduziert. Dies bedeutet mit anderen Worten ausgedrückt, dass dadurch die Anzahl an Gleichteilen in einem erfindungsgemäßen Mehrwegventil erheblich gesteigert werden kann. Dadurch lassen sich die erfindungsgemäßen Mehrwegventile hervorragend anpassen oder individualisieren, bei gleichzeitiger Minimierung der Kosten, sowohl für die Einzelteile als auch für die Fertigung der Mehrwegventile. Im Hinblick auf die Ventilstelleinrichtung und/oder das Ventilsegmentgehäuse kann bevorzugt vorgesehen sein, dass diese vollständig identisch, ggf. auch für unterschiedliche Ventilsegmente, ausgebildet sind. Im Hinblick auf die mechanische Ansteuerungseinheit kann vorgesehen sein, dass diese zumindest weitgehend identisch ausgebildet sind. Eine vollständig identische Realisierung kann für die Ansteuerungseinheiten in der Regel jedoch nicht realisiert werden, da diese ja gerade die Steuerung des gesteuerten Fluidauslasses über oder mittels der Ventilstelleinrichtung bewerkstelligen können oder müssen. Aber auch für die Ansteuerungseinheiten können verschiedene Einzelteile standardisiert werden.

Gemäß einer ersten vorteilhaften Ausführungsform des Mehrwegventils kann vorgesehen sein, dass alle gesteuerten Fluidauslässe, bevorzugt auch der Fluideingang, des Mehrwegventils auf einer Seite eines Ventilgehäuses angeordnet sind und bevorzugt sich zumindest abschnittsweise, insbesondere angrenzend an das Ventilgehäuse, in einer gemeinsamen Richtung ausgehend vom Ventilgehäuse erstrecken. Diese Ausführungsform wird in besonders vorteilhafter Weise weitgehend automatisch oder selbstverständlich durch die erfindungsgemäße Anordnung der modularen Ventilsegmente, insbesondere unter Verwendung eines einheitlichen Ventilsegments oder weniger, geringfügig angepasster Ventilsegmente erreicht bzw. ermöglicht und bietet besondere Vorteile, die ihrerseits vorteilhaft mit der Anpassbarkeit und der Möglichkeit zur Erzielung von Skaleneffekten in der Herstellung der Mehrwegventile zusammenwirken. Denn durch eine entsprechend gemeinsame und einheitliche Anordnung und Ausrichtung der Fluidauslässe, ggf. auch eines Fluideingangs, kann sowohl grundsätzlich Bauraum beim Einbau des entsprechenden Mehrwegventils eingespart werden und darüber hinaus auch besonders einfach die Anordnung oder der Einbau des Mehrwegventils in die Getränkezubereitungsvorrichtung geplant oder vorhergesehen werden, da bereits im Vorfeld oder im Rahmen der Planung sicher ist, an welcher Seite und in welcher Richtung Anschlüsse, beispielsweise Schlauchanschlüsse oder Leitungsanschlüsse vorgesehen oder berücksichtigt werden müssen. Dementsprechend kann beispielsweise besonders vorteilhaft eine Anordnung des Mehrwergventils im Randbereich, oder sogar in einem Eckbereich des Gehäuses der Getränkezubereitungsvorrichtung vorgesehen sein, da zur Herstellung aller Verbindungen oder Anschlüsse für das Fluid oder die Fluide lediglich eine Seite des Ventilgehäuses gut und einfach zugänglich sein muss.

Es kann jedoch auch vorgesehen sein, dass Gruppen von zwei oder mehr Fluidauslässen entsprechend ausgerichtet und/oder angeordnet sind, bevorzugt nebeneinander angeordnete Fluidauslässe. Insgesamt kann der Einbauraum deutlich verringert werden, wenn mehrere Fluidauslässe auf der gleichen Seite aus einem Ventilgehäuse angeordnet sind oder austreten und dabei bevorzugt abschnittsweise in dieselbe Richtung verlaufen oder orientiert sind.

Weiter kann vorteilhaft vorgesehen sein, dass die gesteuerten Ventilauslässe alle parallel zueinander verlaufen. Also auch wenn die gesteuerten Ventilauslässe gebogen oder winklig verlaufen, kann vorteilhaft vorgehsehen sein, dass alle die gleich Form aufweisen und bevorzugt parallel zu einer Grundebene ausgerichtet sind.

Erfindungsgemäß ist weiterhin vorgesehen, dass die mechanischen Ansteuereinheiten zur Ansteuerung der modularen Ventilsegmente und/oder Ventilstelleinrichtungen derart miteinander verbunden, insbesondere gekoppelt sind, dass eine gemeinsame, insbesondere eine einheitlich bewegbare Ansteuereinrichtung des Mehrwegventils gebildet wird. Dadurch wird in besonders vorteilhafter Weise erreicht, dass das besagte Mehrwegventil nicht nur eine kompakte Bauform aufweist, sondern auch dass alle Ventilsegmente und damit alle steuerbaren Fluidauslässe durch die im Rahmen der Verbindung oder Kopplung realisierte gemeinsame Ansteuereinrichtung des Mehrwegventils gesteuert werden können.

Bevorzugt kann vorgesehen sein, dass die entsprechenden, einem jeweiligen Ventilsegment zugeordneten Ansteuereinheiten teilweise oder vollständig von dem Ventilsegmentgehäuse aufgenommen oder umschlossen sind. Gerade in dieser bevorzugten Ausführungsform, in der das Ventilsegmentgehäuse eine Abkapselung oder eine bauliche Trennung oder Individualisierung des jeweiligen Ventilsegments vorsieht oder bewirkt, ist es besonders vorteilhaft, wenn gleichzeitig die Ansteuereinheiten über die jeweiligen Ventilsegmente und/oder Ventilsegmentgehäuse hinweg miteinander verbunden, insbesondere gekoppelt sind und dadurch die Realisierung einer einheitlichen und einheitlich bewegbaren Ansteuereinrichtung erreicht wird.

In diesem Zusammenhang, jedoch nicht auf die vorangehend beschriebene Ausführungsform beschränkt, sei noch erwähnt, dass auch die erfindungsgemäßen Ventilsegmente bevorzugt zumindest teilweise von einem Ventilsegmentgehäuse umfasst oder in dem Ventilsegmentgehäuse aufgenommen sein können. Dabei kann jedoch weiterhin besonders vorteilhaft vorgesehen sein, dass zumindest ein Fluidauslass, insbesondere der gesteuerte Fluidauslass des jeweiligen Ventilsegments mit einer entsprechenden Anschluss- oder Kopplungsstelle, insbesondere zum Verbinden mit Leitungen, Schläuchen od. dgl. aus dem Ventilsegmentgehäuse herausgeführt werden kann, wozu das Ventilsegmentgehäuse bevorzugt ebenfalls standardisierte Durchbrüche oder Ausnehmungen aufweisen kann. Gleiches gilt auch für evtl. vorzusehende Fluideingänge oder Fluidausgänge des Mehrwegventils.

Gemäß einer weiteren, besonders bevorzugten Ausführungsform kann außerdem vorgesehen sein, dass die dem jeweiligen modularen Ventilsegment zugeordneten mechanischen Ansteuereinheiten einen Rotationskörper umfassen, insbesondere zum zumindest mittelbaren Verstellen der Ventilstelleinrichtung, wobei die Rotationskörper eine Rotationsachse aufweisen und wobei bevorzugt alle Rotationsachsen der Rotationskörper entlang einer gemeinsamen Rotationsachse der gemeinsamen, insbesondere einheitlich bewegbaren oder rotierbaren Ansteuereinrichtung verlaufen. Dadurch werden der Aufbau und die Montage des Mehrwegventils deutlich erleichtert und vereinfacht. Auch wird der Betrieb des Mehrwegventils, insbesondere die jeweils individuelle Ansteuerung der Ventilsegmente und/oder Steuerung des gesamten Mehrwegventils deutlich erleichtert, wenn alle Rotationsachsen der Rotationskörper, im gekoppelten oder miteinander verbundenen Zustand der jeweiligen Ansteuereinheiten, eine gemeinsame Rotationsachse ausbilden.

Weiterhin kann besonders vorteilhaft vorgesehen sein, dass das Mehrwegventil eine mechanische Antriebseinheit zum Antrieb der Ansteuereinrichtung, insbesondere durch einen rotatorischen Antrieb von zumindest einer Ansteuereinheit, besonders bevorzugt von zumindest einem Rotationskörper, bevorzugt eines äußeren Ventilsegments, vorsieht. Dadurch wird eine vorteilhafte Bauform möglich, in der einseitig und endseitig an eine Hintereinander- oder Nebeneinanderanordnung von entsprechenden Ventilsegmenten, bevorzugt mit dazugehörigen Ventilsegmentgehäusen oder Ansteuereinheiten eine Anordnung einer Antriebseinheit ermöglicht wird, die durch einen rotatorischen Antrieb einer endseitigen Ansteuereinheit, insbesondere eines entsprechenden Rotationskörpers, die Ansteuerung aller Ventilsegmente und damit auch die Ansteuerung aller gesteuerten Fluidauslässe bewirkt oder realisiert.

Als Antriebseinheit kann beispielsweise ein Elektromotor mit oder ohne Getriebe zum Einsatz kommen. Es kann aber auch eine händisch betätigbare Antriebseinheit, beispielsweise eine Handkurbel oder eine Hebel zum Einsatz kommen.

Außerdem kann gemäß einer weiteren besonders bevorzugten Ausgestaltung des Mehrwegventils vorgesehen sein, dass die jeweils einem Ventilsegment und/oder einem Ventilsegmentgehäuse zugeordnete mechanische Ansteuereinheit, ein bevorzugt den Rotationskörper ausbildenden. Erfindungsgemäß umfasst die Ansteuereinheit ein Nockenwellensegment und ein, bevorzugt vom Nockenwellensegment, zwangsgeführtes Stellelement, wobei insbesondere über eine Nocke oder zumindest eine Nocke des Nockenwellensegments das Stellelement abhängig von einer Winkelstellung des Nockenwellensegments, insbesondere translatorisch, bewegbar ist und die Ventilstelleinrichtung derart mit dem Stellelement zusammenwirkt oder derart mit dem Stellelement verbunden ist, dass zumindest mittelbar durch die Bewegung des Stellelements die Ventilstelleinrichtung zumindest zwischen einer Öffnungsposition und einer Verschlussposition bewegbar ist.

Durch das Vorsehen eines Nockenwellensegments und eines entsprechend zwangsgeführten Stellelements kann sowohl sicher als auch zuverlässig und mit einer entsprechend benötigten rotatorischen oder winkelmäßigen Genauigkeit und Auflösung die Ansteuerung oder die Bewegung der Ventilsteuereinrichtung bewirkt werden. Dies bedeutet, dass im Hinblick auf die Rotationsposition der mechanischen Ansteuereinheit, insbesondere des Rotationskörpers, genau festgelegt und bestimmt werden kann, in welcher Winkelposition des Rotationskörpers und damit auch in welcher Winkelposition einer ggf. vorgesehenen gemeinsamen, einheitlich bewegbaren Ansteuereinrichtung die Ventilstelleinrichtung des jeweiligen modularen Ventilsegments den zumindest einen gesteuerten Fluidauslass öffnet oder schließt.

Ebenfalls kann gemäß einer besonders vorteilhaften Ausführungsform vorgesehen sein, dass die Nockenwellensegmente in axialer Richtung auf gegenüberliegenden Seiten komplementär zueinander ausgebildete Kupplungskonturen, insbesondere Vierkant- oder Vielkantkonturen aufweisen. Dadurch kann die oben bereits beschriebene, vorteilhafte Kopplung der mechanischen Ansteuereinheiten des jeweiligen Ventilsegments bewirkt werden und gleichzeitig in besonders vorteilhafter Weise die sichere und effektivere Übertragung von Kräften, insbesondere Rotationsmomenten oder Drehmomenten sichergestellt werden. Die Kopplung kann dann beispielsweise dergestalt ausfallen, dass bevorzugt vorgesehene Ventilsegmentgehäuse im Bereich der Kopplungskonturen Ausnehmungen oder Durchbrüche aufweisen, sodass zumindest eine der komplementären Kopplungskonturen aus einem Ventilsegmentgehäuse herausgeführt werden kann oder über das Ventilsegmentgehäuse übersteht und in die entsprechend komplementäre Kopplungskontur eines benachbarten Nockenwellensegments eingreifen kann, welches seinerseits als Teil einer mechanischen Ansteuereinheit möglicherweise in einem Ventilsegmentgehäuse angeordnet oder untergebracht ist.

Grundsätzlich sind die Ventilstelleinrichtungen aus Kunststoff gefertigt. Beispielsweise können die Ventilstelleinrichtungen, wie auch andere Teile des Mehrwegeventils aus spritzgegossenen Kunststoffteilen gefertigt werden. Diese können besonders wirtschaftlich in großen Stückzahlen hergestellt werden, was durch die Standardisierung und die erfindungsgemäße Verwendung von Gleichteilen ermöglicht wird.

Gemäß einer weiteren, besonders vorteilhaften Ausführungsform kann vorgesehen sein, dass ein Teil der Ventilstelleinrichtung, insbesondere im Bereich mit geringem Durchmesser, eine metallische, bevorzugt gesinterte Struktur umfasst. Dadurch werden Ermüdungs- und Verschleißphänomenen oder Ermüdungs- oder Verschleißerscheinungen vorgebeugt, die ansonsten Auftreten können, wenn die entsprechenden Ventilstelleinrichtungen mehrere 100 000 oder mehrere Millionen an Stellzyklen durchlaufen.

In dem Zusammenhang mit der Grundidee der vorliegenden Erfindung kann die verhältnismäßig teure oder aufwendige Herstellung oder Fertigung der Stelleinrichtung oder eines Teils der Ventilstelleinrichtung aus Metall, insbesondere aus gesintertem Metall dadurch kompensiert oder überkompensiert werden, dass für entsprechend viele und entsprechend viele unterschiedliche Mehrwegventile gemäß der vorliegenden Erfindung ein und dieselbe Ventilstelleinrichtung verwendet oder verbaut werden, sodass über die entsprechend großen Stückzahlen die Skaleneffekte erreicht werden, die nötig sind, um die verbesserte Ventilstelleinrichtung wirtschaftlich herzustellen und verbauen zu können.

Gemäß einer weiteren, besonders bevorzugten Ausführungsform kann vorgesehen sein, dass die Ventilstelleinrichtung zumindest ein Dichtelement, bevorzugt eine Ringdichtung, umfasst, wobei das zumindest eine Dichtelement so angeordnet und ausgebildet ist, dass in der zumindest einen Öffnungsposition der Ventilstelleinrichtung ein Fluidkanal von zumindest der durch die Ventilsegmente ausgebildeten Hauptleitung zu zumindest einem gesteuerten Fluidauslass des Ventilsegments erzeugt und/oder freigegeben wird. Die zumindest eine Dichtung oder das zumindest eine Dichtelement kann entsprechend so ausgestaltet sein, dass durch ein Zusammenwirken mit einer Innenoberfläche des Ventilsegments entsprechende Fluidpfade geöffnet oder geschlossen werden. Auch können Dichtelemente vorgesehen sein, die das Ventilsegment insgesamt abdichten, also gerade auch unabhängig von der Position der Ventilstelleinrichtung abdichten. Besonders bevorzugt kann vorgesehen sein, dass ein Dichtelement mit einem durch das Ventilsegment bereitgestellten oder ausgebildeten Ventilsitz zusammenwirkt und dichtend mit dem entsprechenden Ventilsitz zur Anlage kommt, bevorzugt um in der Schließposition der Ventilstelleinrichtung einen Fluidkanal zu verschließen.

Gemäß einer weiteren, besonders vorteilhaften Ausgestaltung des Mehrwegventils kann vorgesehen sein, dass zwischen jeweils einem Fluidauslass eines Ventilsegments und einem Fluideinlass eines nachfolgenden Fluidsegments, welche gemeinsam eine sich an den Fluideingang des Ventils anschließende Ventilhauptleitung ausbilden, ein Segmentdichtelement zur Abdichtung der Ventilhauptleitung zwischen den Ventilsegmenten angeordnet ist. Die Abdichtung des Übergangs zwischen den Ventilsegmenten kann die modulare oder baukastenartige Realisierung des Mehrwegventils in besonders vorteilhafter Weise weiterbilden oder verbessern. Denn je größer und je druckstabiler die Dichtigkeit oder die Dichtheit des Übergangs zwischen benachbarten modularen Ventilsegmenten ausgebildet oder ausgestaltet ist, umso mehr Ventilsegmente lassen sich, insbesondere ohne eine tolerierbare Leckagerate zu überschreiten, aneinanderkoppeln oder miteinander verbinden, um auch komplexe Mehrwegventile mit verhältnismäßig wenigen unterschiedlichen Bauteilen oder Baugruppen zu realisieren. Als mögliche Segmentdichtelemente kommen sowohl Ringdichten als auch andere Dichtungen, bevorzugt aus Kunststoff-, Gummi- und/oder Polymermaterial infrage.

Für die Dichtelemente der Ventilstelleinrichtung und/oder der Segmentdichtelemente können neben Ringdichtungen auch dynamische Dichtelemente zum Einsatz kommen, die sich gerade dadurch auszeichnen, dass deren Dichtheit oder Dichtwirkung durch einen anliegenden oder einwirkenden Fluiddruck auf das Dichtelement erreicht oder verbessert werden. Dabei können unterschiedliche Ausgestaltungen von dynamischen Dichtungskonzepten umgesetzt werden.

Bezüglich der dichten Verbindung der Ventilsegmente kommt alternativ zu einem Vorsehen von Segmentdichtelementen auch die stoffschlüssige Verbindung von Ventilsegmenten vorteilhaft in Frage. Beispielsweise kann dazu vorgesehen werden, dass benachbarte Ventilsegmente miteinander verschweißt werden. Auch eine Verklebung ist möglich.

Eine weitere besonders bevorzugte Ausgestaltung des erfindungsgemäßen Mehrwegventils sieht weiterhin vor, dass die Ventilsegmentgehäuse mechanische Kopplungsmittel, bevorzugt Verbindungsausnehmungen zur Aufnahme eines Kopplungsbolzens, aufweisen, um die Ventilsegmentgehäuse, bevorzugt unmittelbar miteinander zu verbinden. Die Ventilsegmentgehäuse können alternativ oder zusätzlich zu den Verbindungsausnehmungen auch komplementäre Kopplungskonturen, insbesondere in axialer Richtung, vorsehen, die eine, intuitive und wohl definierte Relativanordnung der Ventilsegmentgehäuse zueinander festlegen, wenn mehrere oder eine Vielzahl von Ventilsegmentgehäusen zur Ausbildung eines entsprechenden Mehrwegventils miteinander gekoppelt oder verbunden werden.

Die Kopplungsmittel können alternativ auch als Schnappverbindungen oder als Bajonettverschlüsse ausgebildet sein. Bevorzugt sind die Kopplungsmittel so ausgestaltet, dass eine werkzeuglose Kopplung möglich ist.

Gemäß einer weiteren, besonders bevorzugten Ausführungsform kann außerdem vorgesehen sein, dass die Ventilsegmentgehäuse im Wesentlichen einen Boden und einen an den Boden angrenzenden, bevorzugt in Umfangsrichtung umlaufenden Rand- oder Wandabschnitt aufweisen. Eine derartige, deckellose, Ausgestaltung der jeweiligen Ventilsegmentgehäuse ermöglicht abermals die Verwendung von identischen oder nahezu identischen Bauteilen unter zusätzlicher Einsparung von Material. Denn zur entsprechenden Verbindung oder Kopplung von Ventilsegmenten, bevorzugt einschließlich der entsprechenden Verbindung oder Kopplung von Ventilsegmentgehäusen können dann zwei oder mehr derartige Ventilsegmentgehäuse aufeinandergestapelt und ggf. miteinander verbunden werden, wobei dann der Boden eines nachfolgenden Ventilsegmentgehäuses gleichzeitig auch als Deckel eines vorangehend angeordneten Ventilsegmentgehäuses wirkt oder fungiert. In diesem Fall ist neben einem einheitlichen, deckellosen Ventilsegmentgehäusemodul nur ein weiteres ebenfalls in unterschiedlichen Ausführungen verwendbares Gehäuseteil vorzusehen, nämlich einen abschließenden Ventilsegmentgehäusedeckel, der jeweils für das letzte Ventilsegment die deckellose Ventilsegmentgehäusestruktur abschließt.

In einem solchen Ventilsegmentgehäusedeckel können dabei ebenfalls weitere Vorrichtungen oder Einrichtungen realisiert sein, um das Mehrwegventil insgesamt abzuschließen oder zu beenden und dadurch die Verwendung von Gleichteilen, insbesondere im Bezug auf die Ventilsegmente weiter zu erhöhen. Beispielsweise können Verschlussmittel vorgesehen sein, die die Ventilhauptleitung abschließen und/oder abdichten, selbst für den Fall, wenn das verwendete, letzte Ventilsegment neben einem gesteuerten Fluidauslass einen weiteren Fluidauslass, bevorzugt in axialer Richtung entlang der Ventilhauptleitung, aufweist. Dies wiederum ermöglicht noch stärker das Zurückgreifen auf oder das Verwenden von Gleichteilen, da dann auch der Abschluss oder der Verschluss der durch die Ventilsegmente gebildeten Ventilhauptleitung ohne ein entsprechend spezialisiertes Ventilsegment sondern unter Verwendung eines allgemeinen oder standardisierten Ventilsegments bewerkstelligt werden kann. Auch Mittel zur Aufnahme, Führung und/oder Lagerung der mechanischen Ansteuereinheit, samt ggf. vorhandener Konturen, insbesondere Kopplungskonturen von Rotationskörpern, können im beschriebenen Ventilsegmentgehäusedeckel vorgesehen oder ausgebildet sein.

Eine weitere, besonders bevorzugte Ausgestaltung des Mehrwegventils sieht vor, dass das Mehrwegventil zumindest ein Eingangs-Ventilsegmentventil umfasst, welches einen Fluideinlass als nicht gesteuerter Fluideingang zum Anschluss an eine externe Fluidquelle, einen Fluidauslass als nicht gesteuerter Fluidverbindungsausgang zur Verbindung mit einem Fluideinlass eines nachfolgenden Ventilsegments und einen Fluidauslass als mit der Ventilstelleinrichtung gesteuerten Fluidauslass umfasst. Das derart vorgeschlagene Eingangs-Ventilsegment wäre dementsprechend eine Sonderform oder Spezialform eines allgemeinen Ventilsegments, welches aber seinerseits ebenfalls in einer schier unbegrenzten Anzahl von unterschiedlichen Mehrwegventilen zum Einsatz kommen kann und die Ankopplung oder die Verbindung an eine externe Fluidquelle über den speziell ausgebildeten Fluideinlass sicherstellt.

Ebenfalls gemäß einer vorteilhaften Ausführungsform des Mehrwegventils kann vorgesehen sein, dass dieses zumindest ein Mittel-Ventilsegment umfasst, welches einen Fluidauslass als nicht gesteuerten Fluidverbindungseingang zur Verbindung mit einem vorangehenden Ventilsegment, einen Fluidauslass als nicht gesteuerten Fluidverbindungsausgang zur Verbindung mit einem Fluideinlass eines nachfolgenden Ventilsegments und einen Fluidauslass als mit der Ventilstelleinrichtung gesteuerten Fluidauslass umfasst. Ein derartiges Mittel-Ventilsegment könnte für alle Mehrwegventile, die drei oder mehr Ventilsegmente umfasst eine erhebliche Reduzierung der notwendigen Bauteile und Baugruppen bewirken, da dieses Mittel-Ventilsegment in jedem entsprechenden Mehrwegventil einfach oder sogar mehrfach zur Anwendung kommen kann.

Ebenfalls kann gemäß einer weiteren, besonders bevorzugten Ausgestaltung des Mehrwegventils vorgesehen sein, dass dieses zumindest ein End-Ventilsegment umfasst, welches einen Fluideinlass als nicht gesteuerten Fluidverbindungseingang zur Verbindung mit einem vorhergehenden Ventilsegment und einen Fluidauslass als mit der Ventilstelleinrichtung gesteuerten Fluidauslass umfasst. Auch diese Ausgestaltung des End- oder Abschluss-Ventilsegments könnte in jedem entsprechenden Mehrwegventil zum Einsatz kommen. Gleichermaßen könnte, wie oben bereits beschrieben oder zumindest angedeutet das End-Ventilsegment eines Mehrwegventils auch durch ein vorangehend beschriebenes Mittel-Ventilsegment bereitgestellt werden, insbesondere für den Fall, dass das dazugehörige ober zusammenwirkende Ventilsegmentgehäuse über entsprechende Mittel zum Abschluss und/oder zur Abdichtung der Ventilhauptleitung oder eines weiteren entsprechenden nicht gesteuerten Ventilauslasses verfügt.

In einer alternativen Ausführungsform, in der dann das End-Ventilsegment bevorzugt sogar baugleich mit einem Eingangs-Ventilsegment ausgestaltet sein kann, verfügt das End-Ventilsegment über einen weiteren Fluidauslass, der beispielsweise mit einem Überdruckventil zusammenwirkt und insofern als mittelbar gesteuerter Fluidauslass anzusehen ist, der nämlich das Überdruckventil öffnet und damit einen Überdruck von der Ventilhauptleitung abführt oder reduziert. Sofern das Überdruckventil auf einen standardisierten Anschluss oder auf einen standardisierten Stutzen aufbringbar oder an diesem befestigbar ist, der auch für die Ankopplung eines Schlauchs, einer Leitung oder dergleichen von einer externen Fluidquelle dienen kann oder dazu geeignet ist, können das Eingangs-Ventilsegment und End-Ventilsegment sogar ebenfalls als identische Bauteile ausgeführt werden, da dann die als Fluideingang genutzte Fluidöffnung des Eingangs-Ventilsegments beim entsprechenden End-Ventilsegment als Überdruck-Fluidauslass genutzt werden kann oder nutzbar gemacht werden kann, indem ein entsprechendes Überdruckventil an der Fluidöffnung angebracht oder befestigt wird. In diesem Fall wären dann zusätzliche in Richtung der Ventilhauptleitung verlaufende Fluidöffnungen vorzusehen, die bevorzugt über Mittel der abschließenden Ventilsegmentgehäuse unter Ausbildung der Ventilhauptleitung verschlossen und/oder abgedichtet werden.

In einer weiteren vorteilhaften Weiterbildung des erfindungsgemäßen Mehrwegeventils kann zudem vorgesehen sein, dass wenigstens ein Fluideinkopplungs-Ventilsegment vorgesehen ist, welches einen mit einer Ventilstelleinrichtung gesteuerten Fluideinlass umfasst, der analog zu einem gesteuerten Fluidauslass eine Zufuhr eines Fluides, insbesondere Luft in das Ventil, besonders bevorzugt in eine Hauptleitung des Ventils ermöglicht. Mit dem Unterschied, dass durch derartige Ventilsegmente ein Fluid eingekoppelt oder eingetragen wird, können die entsprechenden Fluidsegmente und Ventilstelleinrichtungen analog zu den oben beschriebenen Segmenten mit einem gesteuerten Fluidauslass ausgebildet sein.

Es kommen dabei Luftzuführventile und/oder Drosseln aber auch andere Funktionen in Frage. Besonders kann vorgesehen sein, dass die gesteuerten Fluideinlässe mit einer Druckquelle, beispielsweise mit einer Druckluftquelle, einer Luftpumpe oder einem Druckluftreservoir verbunden sind.

Ebenfalls können Ventilsegmente vorgesehen sein, die sowohl einen, bevorzugt gesteuerten, Fluidauslass und einen zusätzlichen Fluideinlass eines weiteren Fluides beispielsweise einen Lufteinlass aufweisen. Die Fluideinlässe können dabei bevorzugt zusätzlich zu dem Fluideinlassausgebildet sein, der zur Ausbildung der Hauptleitung dient und kann bevorzugt als mittelbar gesteuert ausgestaltet sein, was bedeutet, dass diese abhängig von Umgebungs- oder Ventilparametern gesteuert, also geöffnet oder geschlossen werden. Diese können beispielsweise als Luftdrosseleinrichtungen ausgebildet sein.

Die oben genannte Aufgabe wird ebenfalls durch ein Mehrfluid-Mehrwegventil gelöst, welches zumindest zwei Mehrwegventile gemäß einer der vorangehend beschriebenen Ausführungsformen aufweist, wobei erfindungsgemäß die zumindest zwei Mehrwegventile derart miteinander verbunden sind, dass die mechanischen Ansteuereinheiten der Ventilsegmente der unterschiedlichen Mehrwegventile derart miteinander verbunden sind, insbesondere gekoppelt sind, dass eine gemeinsame, insbesondere eine einheitlich bewegbare, Ansteuereinrichtung des Mehrfluid-Mehrwegventils gebildet wird.

Dadurch können im Wesentlichen zwei Mehrwegventile, die selbstredend über jeweilige Fluideingänge, und eine durch die jeweiligen Ventilsegmente gebildete oder ausgebildete Ventilhauptleitung und die entsprechenden mit den Ventilstelleinrichtungen gesteuerten Fluidauslässe verfügen, durch ein bloßes hintereinander anordnen der Ventilsegmente oder allgemeiner der Mehrwegventile gebildet werden und zudem einheitlich angesteuert und/oder angetrieben werden. Dabei ist lediglich sicherzustellen, dass die entsprechenden Hauptleitungen oder Ventilhauptleitungen nicht miteinander verbunden sind oder nicht miteinander verbunden werden. Durch die vorgesehene gemeinsame und insbesondere einheitlich bewegbare Ansteuereinrichtung kann sichergestellt werden, dass für jeden vorgesehenen Betriebszustand oder Öffnungs- oder Verschlusszustand der jeweiligen Ventilsegmente eine Position, insbesondere eine Rotationsposition der Ansteuereinrichtung vorgesehen ist, die dann die gewünschte Öffnung oder den gewünschten Verschluss der jeweiligen Ventilsegmente oder gesteuerten Fluidauslässe der Ventilsegmente sicherstellt.

Dies bedeutet im Umkehrschluss aber auch, dass die Komplexität eines erfindungsgemäßen Mehrfluid-Mehrwegventils im Wesentlichen nur durch die kombinatorischen Anforderungen an individuelle Schalt- oder Steuerzustände in Verknüpfung mit den über die Ansteuereinrichtung realisierbaren Steuerzustände, insbesondere unabhängig voneinander definierbaren Winkelpositionen, begrenzt wird.

Ebenfalls wird die oben genannte Aufgabe der vorliegenden Erfindung durch eine Getränkezubereitungsvorrichtung, insbesondere eine Kaffeemaschine gelöst, die ein Mehrwegventil und/oder ein Mehrfluid-Mehrwegventil gemäß der vorangehenden Beschreibung aufweist gelöst.

Weitere Vorteile, Merkmale und Einzelheiten der Erfindung ergeben sich aus der nachfolgenden Beschreibung bevorzugter Ausführungsbeispiele sowie anhand der Zeichnungen.

Diese zeigen:
- Fig. 1:: eine schematische Perspektivdarstellung eines erfindungsgemäßen Mehrwegventils einschließlich einer mechanischen Antriebseinheit;
- Fig. 2:: eine schematische Perspektivdarstellung des erfindungsgemäßen Mehrwegventils gemäß Fig. 1 unter Ausblendung von Gehäuseelementen;
- Fig. 3:: den Schnitt durch ein erfindungsgemäßes Mehrwegventil auf der axialen Höhe eines Mittel-Ventilsegments;
- Fig. 4:: eine schematische Perspektivdarstellung eines Teils eines Ventilsegmentgehäuses.

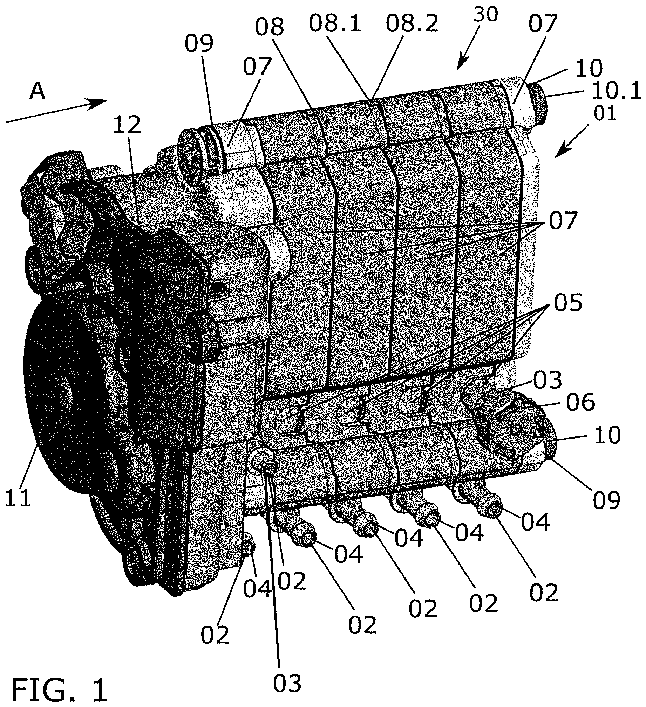

Fig. 1 zeigt ein erfindungsgemäßes Mehrwegventil 01 mit einem als Fluidöffnung 02 ausgebildeten Fluideingang 03 und einer Vielzahl von als gesteuerte Fluidauslässe 04 ausgebildete Fluidöffnungen 02. Das Mehrwegventil 01 umfasst ferner einen mittelbar oder indirekt gesteuerten Fluideinlass 06, der als Luftdrosseleinrichtung funktioniert oder vorgesehen ist. Alternativ könnte anstatt dem Fluideinlass 06 auch ein Überdruckventil vorgesehen werden. Bereits der Fig. 1 ist zu entnehmen, dass das Mehrwegventil 01 modular aufgebaut ist und die gesteuerten Fluidauslässe 04 von einer Vielzahl von modularen Ventilsegmenten 05 ausgebildet werden, die ihrerseits zumindest zum Teil in ebenfalls modularen Ventilsegmentgehäusen 07 aufgenommen sind. Die Ventilsegmentgehäuse 07 weisen verschiedene Ausnehmungen 08.1 und Vorsprünge 08.2 auf, die als Kopplungsmittel 08 komplementär zueinander, insbesondere in axialer Richtung A komplementär zueinander ausgebildet sind, um eine einfache und sichere Relativanordnung der Ventilsegmentgehäuse 07 nebeneinander oder aneinander zu ermöglichen. Die Ventilsegmentgehäuse 07 weisen ferner Ausnehmungen 09 auf, die die Aufnahme von Kopplungsbolzen 10 ermöglichen und somit die einzelnen Ventilsegmentgehäuse 07 miteinander verbinden oder koppeln. Die Kopplungsbolzen 10 können einends Verschluss- und/oder Befestigungsmittel, beispielsweise Schraubmittel 10.1 aufweisen, um die Ventilsegmentgehäuse 7 miteinander oder aneinander zu befestigen.

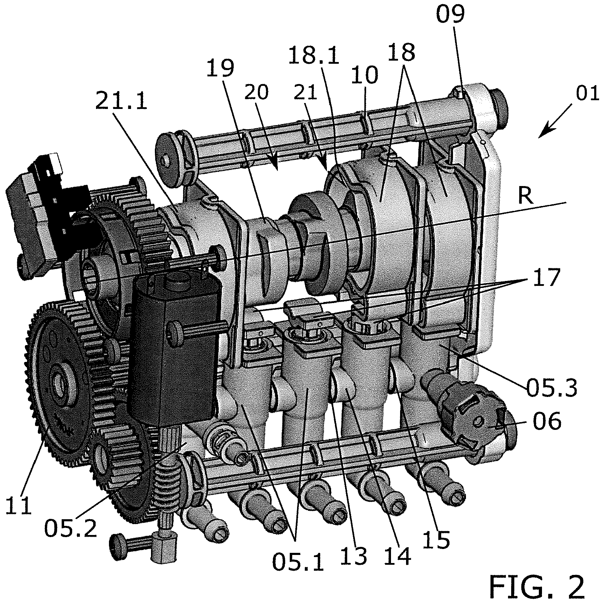

Aus der Darstellung der Fig. 1, der auch die mechanische Antriebseinheit 11 aufweist, wird bereits sehr intuitiv deutlich, dass das Mehrwegventil 01 mit einem Mindestmaß an unterschiedlichen Bauteilen oder Baugruppen gefertigt oder hergestellt werden kann, wobei auch eine Erweiterung, insbesondere das Vorsehen von weiteren gesteuerten Fluidauslässen 04 ohne Weiteres möglich ist, indem weitere Ventilsegmente 05 und/oder weitere Ventilsegmentgehäuse 07 vorgesehen, insbesondere zwischengeschaltet werden. Eine noch bessere Veranschaulichung im Hinblick auf das erfindungsgemäße Konzept ermöglicht die Darstellung der Fig. 2, in der im Wesentlichen die Ventilsegmentgehäuse 07, als auch das Antriebsgehäuse 12 ausgeblendet ist.

Ein weiterer besonderer Vorteil der sowohl auf die Mehrwegventile 01 als auch auf die entsprechenden Mehrfluid-Mehrwegventile zutrifft ist die Tatsache, dass wie in Fig. 1 dargestellt alle Fluidauslässe 04 auf einer Seite des Ventilgehäuses 30 angeordnet sind und sich zudem zunächst abschnittsweise in einer gemeinsamen Richtung ausgehend vom Ventilgehäuse 30 erstrecken und des weiteren insgesamt parallel angeordnet sind und eine identische Form aufweisen. Auch einzelne der vorgenannten Eigenschaften können bereits einen platzsparenden Einbau in einer Getränkezubereitungsvorrichtung ermöglichen.

In der Fig. 2 sind die einzelnen Ventilsegmente 05 deutlicher zu erkennen. Weiterhin ist auch das erfindungsgemäße Konzept deutlich zu erkennen, wonach jeweils ein nicht gesteuerter Fluidauslass 13 eines Ventilsegments 05 mit einem Fluideinlass 14 eines nachfolgenden Ventilsegments 05 derart miteinander verbunden ist, dass jeweils durch den Fluidauslass 13 und den Fluideinlass 14 eine sich an den Fluideingang 03 anschließende Ventilhauptleitung 15 ausgebildet wird. Dabei ist insbesondere zu erkennen, dass die Ventilsegmente 05 oder zumindest die Mittel-Ventilsegmente 05.1 alle identisch ausgeführt sind und dementsprechend als Gleichteile produziert und verbaut werden können. Auch die Anfangs-Ventilsegmente 05.2 und das End-Ventilsegment 05.3 kann, je nach Ausgestaltung des Fluideinlasses 06 und der Verbindung de Luftdrosseleinrichtung 16 mit der entsprechenden Fluidöffnung 02 des End-Ventilsegments 05 als identisches Bauteil oder als gleiches Bauteil ausgebildet werden. Selbst wenn dem nicht der Fall ist, könnte mit insgesamt drei unterschiedlichen Ventilsegmenten 05, wie in der Fig. 2 dargestellt, annähernd jedes, beliebig komplexes, Mehrwegventil ausgebildet werden. Dabei ist weiterhin vorteilhaft, dass die im jeweiligen Ventilsegment 05 verbauten oder vorgesehenen Ventilstelleinrichtungen 17 ebenfalls identisch oder als Gleichteile ausgebildet sind, dies sogar unabhängig von der Ausgestaltung oder Funktionalität des Ventilsegments 05.

In der Fig. 2 ist ebenfalls zu erkennen, dass die Ventilstelleinrichtungen 17 zumindest mittelbar von Stellelementen 18 betätigt, insbesondere zwischen einer Öffnungsposition und einer Verschlussposition verstellbar sind, wobei die Stellelemente 18 zwangsgeführt sind, was durch die Innenkontur 18.1 der Stellelemente 18 im Zusammenwirken mit den jeweiligen zweistufigen Nockenwellensegmenten 19 realisiert wird. Auch ist erkennbar, dass die Stellelemente 18 weitestgehend oder komplett identisch ausgeführt werden können. Lediglich die Nockenwellensegmente 19 müssen, je nach Öffnungszustand oder Schließzustand des jeweiligen Ventilsegments 05 in Abhängigkeit von der Rotationsposition der mechanischen Ansteuereinrichtung 20 individuell ausgelegt oder individuell gefertigt werden.

Die jeweilige Ansteuereinheiten 21 können beispielsweise die Stellelemente 18 sowie die Nockenwellensegmente 19 umfassen und in dem jeweiligen Ventilsegmentgehäuse gelagert ausgebildet sein. Die Ansteuereinheiten 21 können durch die in der Fig. 2 dargestellte Kopplung untereinander oder miteinander eine einheitliche, gemeinsame Ansteuereinrichtung 20 ausbilden, die ihrerseits über eine endseitige Ansteuereinheit 21.1 mit der Antriebseinheit 11 gekoppelt und/oder verbunden ist.

Folglich besteht ein weiterer Vorteil der erfindungsgemäßen Mehrwegventile 01 auch darin, dass die mechanischen Ansteuereinheiten 21, die ihrerseits jeweils auch einen das Nockenwellensegment 19 ausbildenden Rotationskörper umfassen eine gemeinsame, insbesondere eine einheitlich bewegbare, bevorzugt drehbare, Ansteuereinrichtung 20 ausbilden, die ihrerseits von dem mechanischen Antrieb 11 angetrieben werden kann. Dazu können die Nockenwellensegmente 19 jeweils in den in der Fig. 2 nicht dargestellten Ventilsegmentgehäusen 07 aufgenommen, geführt und/oder gelagert werden, wobei die Ventilsegmentgehäuse 07 dementsprechend auch Durchbrüche oder Öffnungen aufweisen, um eine Verbindung oder Kopplung der Nockenwellensegmente 19 untereinander, bevorzugt über in der Fig. 2 nicht dargestellte Kopplungskonturen, beispielsweise Vielkantkonturen, zu ermöglichen, wobei die Kopplungskonturen bevorzugt komplementär zueinander ausgebildet sind und jeweils eine Kopplungskontur aus einem Ventilsegmentgehäuse 07 herausragt und in ein benachbartes Ventilsegmentgehäuse 07 hineinragt und dort in die komplementäre, zurückgesetzte oder zurückgenommene Kopplungskontur eingreift, um somit die gemeinsame, einheitlich bewegbare Ansteuereinrichtung 20 auszubilden.

Wie der Fig. 2 entnommen werden kann, sind die die Nockenwellensegmente 19 ausbildenden Rotationskörper 23 so angeordnet und/oder so miteinander verbunden, dass die von den Rotationskörpern 23 ausgebildeten Rotationsachsen alle entlang einer gemeinsamen Rotationsachse A verlaufen.

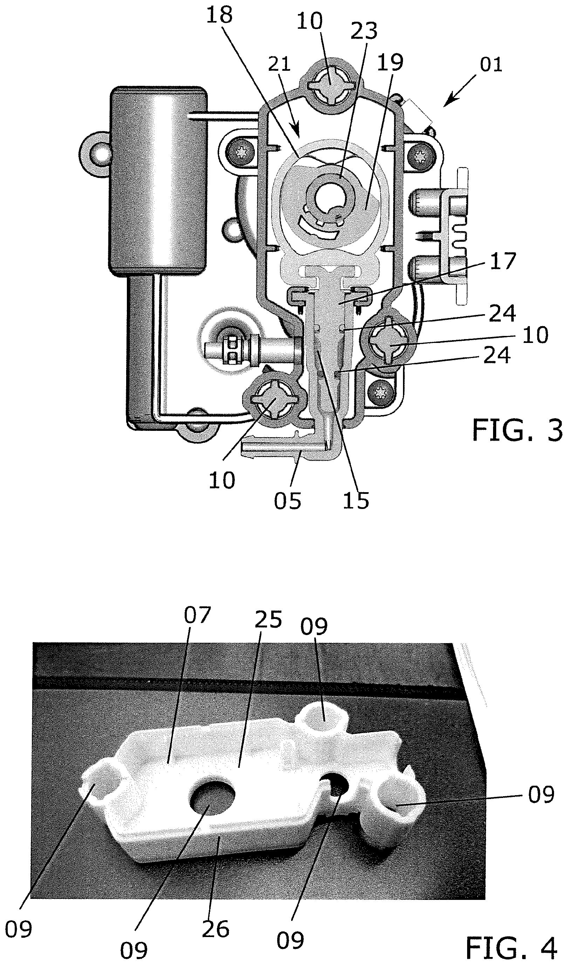

Die Fig. 3 zeigt einen Schnitt durch das erfindungsgemäße Mehrwegventil 01 senkrecht zu der axialen Richtung oder senkrecht zur gemeinsamen Rotationsachse A auf der Höhe eines Mittel-Ventilsegments 05.1. In der Darstellung der Fig. 3 ist nochmals die Funktionsweise der mechanischen Ansteuereinheit 21 erläutert. Die mechanische Ansteuereinheit 21 umfasst einerseits das Stellelement 18, aber auch die das Nockenwellensegment 19 ausbildenden Rotationskörper 23. Die Stellelemente 18 sind ihrerseits mit den Ventilstelleinrichtungen 17 gekoppelt oder verbunden, sodass eine entsprechende Rotation des Nockenwellensegments 19 eine Zwangsführung, bevorzugt in Zusammenwirken mit dem Ventilsegmentgehäuse 07, auf das Stellelement 18 ausübt und die dadurch, abhängig von der Rotationsposition des Rotationskörpers 23 eingenommene Stellung zu einer translatorischen oder lateralen, zwangsgeführten Verschiebung des Stellelements 18 führt, die wiederum bewirkt, dass das Ventilstellelement 17 entweder in den in der Fig. 3 dargestellten Verschlusszustand oder aber in einen alternativen Öffnungszustand übergeht. Im Verschlusszustand der Fig. 3 verschließt das Ventilstellelement 17, zusammenwirkend mit einem Dichtelement 24 einen möglichen Fluidkanal von der in der Fig. 3 nur angedeuteten Hauptleitung 15 zu dem gesteuerten Fluidauslass 04. Ein weiteres Dichtelement 24 dichtet, unabhängig von der Stellposition oder Position der Ventilstelleinrichtung 17 die Ventilstelleinrichtung 17 gegenüber dem Ventilsegment 05 ab, sodass das Fluid sich lediglich in der Ventilhauptleitung 15 ausbreiten und ggf. aus dem gesteuerten Fluidauslass 04 ausströmen kann.

Die Fig. 4 zeigt eine beispielhafte Ausführungsform eines Ventilsegmentgehäuses 07 oder eines Teil eines Ventilsegmentgehäuses 07. Einerseits sind zu erkennen die Ausnehmungen 09 zur Aufnahme der Kopplungsbolzen 10. Weiterhin zu erkennen ist, dass das Ventilsegmentgehäuse 07 im Wesentlichen aus einem Boden 25 und einer am Boden 25 anschließenden zumindest abschnittsweise umlaufenden Wand 26 gebildet wird. Der Boden 25 umfasst zudem Ausnehmungen 09, die einerseits zur Aufnahme oder Durchführung von Nockenwellensegmenten 19 oder Teilen von Nockenwellensegmenten 19 andererseits zur Aufnahme oder Durchführung von Fluideinlässen 14 bzw. Fluidauslässen 13 der Ventilsegmente 05 dienen. Vorteilhafterweise können mit Ausnahme des letzten Ventilsegmentgehäuses 07 alle vom Mehrwegventil 01 umfassten Ventilsegmentgehäuse 07 ausschließlich aus zwei der in der Fig. 4 dargestellten Bauteil gebildet werden. Dabei bildet der Boden 25 eines nachfolgenden Ventilsegmentgehäuses auch gleichzeitig den Deckel eines vorangehend angeordneten Ventilsegmentgehäuses 07. Dadurch kann ebenfalls die grundsätzliche oder gesamte Anzahl an Bauteilen zur Realisierung der erfindungsgemäßen Mehrwegventile 01 deutlich herabgesetzt werden. Insgesamt ergibt sich nicht nur durch die Ausbildung der Ventilhauptleitung 15 durch die Kopplung modularer Ventilsegmente 05 aber bevorzugt auch durch die Verwendung entsprechend standardisierter Ventilsegmentgehäuse 07 zur Aufnahme und/oder Führung der mechanischen Ansteuereinheiten 21 für die ebenfalls bevorzugt vereinheitlichten Ventilstelleinrichtungen 17 eine Möglichkeit grundsätzlich beliebig komplexe Mehrwegventile 01 mit einer Mindestanzahl an unterschiedlichen Teilen oder anders formuliert mit einer maximalen Anzahl an Gleichteilen zu konstruieren, abzuändern und anzupassen.

In gleichem Maße kann neben einem Mehrwegventil 01, wie beispielsweise in der Fig. 1 gezeigt, auch entsprechend einfach und unter Verwendung von sehr vielen Gleichteilen ein Mehrfluid-Mehrwegventil bereitgestellt werden, indem beispielsweise ebenfalls unter Verwendung einer gemeinsamen Antriebseinheit 11 und ein Vorsehen von zwei in sich abgeschlossenen, und ansonsten analog zur Darstellung des Mehrwegventils 01 der Fig. 1 aufgebauten Mehrwegventile 01 in einer entsprechenden Hintereinanderanordnung ein erfindungsgemäßes Mehrfluid-Mehrwegventil realisiert werden kann. Dabei ist bevorzugt einerseits sicherzustellen, dass die mechanischen Ansteuereinheiten 21 am Übergang der zwei oder mehr Mehrwegventile 01 miteinander gekoppelt oder miteinander verbunden sind, um somit einen gemeinsamen und einheitlichen Antrieb nutzen zu können. Dies ist aber ohne Weiteres in gleicher Art und Weise möglich, wie auch die Verbindung oder Kopplung der Ansteuereinheiten 21 der jeweiligen Ventilsegmente 05 oder Ventilsegmentgehäuse 07. Gleichermaßen ist sicherzustellen, dass die Ventilhauptleitungen 15 unterschiedlicher Mehrwegventile voneinander getrennt sind, was entweder durch entsprechende Anfangs- und/oder End-Ventilsegmente 05 sichergestellt werden kann, alternativ dazu aber auch durch entsprechend ausgebildete Ventilsegmentgehäuse 07 erreicht werden kann.

### Bezugszeichenliste

- 01: Mehrwegventil
- 02: Fluidöffnungen
- 03: Fluideingang
- 04: Fluidauslässe
- 05: Ventilsegment
- 05.1: Mittel-Ventilsegment
- 05.2: Anfangs-Ventilsegment
- 05.3: End-Ventilsegment
- 06: Fluideinlass
- 07: Ventilsegmentgehäuse
- 08: Kopplungsmittel
- 08.1: Ausnehmung
- 08.2: Vorsprung
- 09: Ausnehmungen
- 10: Kopplungsbolzen
- 11: Antriebseinheit
- 12: Antriebsgehäuse
- 13: Fluidauslass
- 14: Fluideinlass
- 15: Ventilhauptleitung
- 16: Luftdrosseleinrichtung
- 17: Ventilstelleinrichtungen
- 18: Stellelemente
- 18.1: Innenkontur des Stellelements
- 19: Nockenwellensegmente
- 20: Ansteuereinrichtung
- 21: Ansteuereinheiten
- 21.1: endseitige Ansteuereinheit
- 23: Rotationskörper
- 24: Dichtelement
- 25: Boden
- 26: umlaufende Wand
- 30: Ventilgehäuse

- A: Rotationsachse/ axiale Richtung

## Patentansprüche

1. Mehrwegventil (01) für Fluid, insbesondere Wasser und/oder Wasser-Dampf, für eine Getränkezubereitungsvorrichtung, umfassend eine als Fluideingang (03) ausgebildete Fluidöffnung (02) für das Fluid und eine Vielzahl von als gesteuerte Fluidauslässe (04) ausgebildeten Fluidöffnungen (02) für das Fluid,
wobei eine Vielzahl von modularen Ventilsegmenten (05), die jeweils einen Fluideinlass (14), einen gesteuerten Fluidauslass (04) und einen nicht gesteuerten Fluidauslass (13) und eine einen gesteuerten Fluidauslass (04) steuernde Ventilstelleinrichtung (17) aufweisen, wobei die Ventilstelleinrichtung (17) von einer mechanischen Ansteuereinheit (21) zwischen zumindest einer Öffnungsposition und zumindest einer Verschlussposition verstellbar ist und bevorzugt in einem Ventilsegmentgehäuse (07) angeordnet ist und wobei die modularen Ventilsegmente (05) insbesondere auch die Ventilsegmentgehäuse (07), derart miteinander verbunden sind, dass durch jeweils einen nicht gesteuerten Fluidauslass (13) eines Ventilsegments (05) und einen Fluideinlass (14) eines nachfolgenden Ventilsegments (05) eine sich an den Fluideingang (03) des Ventils anschließende Ventilhauptleitung (15) ausgebildet wird,
wobei die mechanischen Ansteuereinheiten (21) zur Ansteuerung der modularen Ventilsegmente (05) und/oder Ventilstelleinrichtungen (17) derart miteinander verbunden, insbesondere gekoppelt, sind, dass eine gemeinsame, insbesondere eine einheitlich bewegbare, Ansteuereinrichtung (20) des Mehrwegventils (01) gebildet wird,
**dadurch gekennzeichnet,**
**dass** die mechanische Ansteuereinheit (21) ein Nockenwellensegment (19) und einen zwangsgeführtes Stellelement (18) umfasst.

2. Mehrwegventil nach Anspruch 1,
**dadurch gekennzeichnet,**
**dass** alle gesteuerten Fluidauslässe (04), bevorzugt auch der Fluideingang (03), des Mehrwegventils (01) auf einer Seite eines Ventilgehäuses (30) angeordnet sind und bevorzugt sich zumindest abschnittsweise, insbesondere angrenzend an das Ventilgehäuse (30), in einer gemeinsame Richtung ausgehend vom Ventilgehäuse (30) erstrecken.

3. Mehrwegventil nach einem der Ansprüche 1 bis 2,
**dadurch gekennzeichnet,**
**dass** die mechanischen Ansteuereinheiten (21) einen Rotationskörper (23) umfassen, insbesondere zum zumindest mittelbaren Verstellen der Ventilstelleinrichtung (17), wobei die Rotationskörper (23) eine Rotationsachse (A) aufweisen, wobei bevorzugt alle Rotationsachsen (A) der Rotationskörper (23) entlang einer gemeinsamen Rotationsachse (A) der Ansteuereinrichtung (20) verlaufen.

4. Mehrwegventil nach einem der Ansprüche 1 bis 3,
**gekennzeichnet durch**
eine mechanische Antriebseinheit (11) zum Antrieb der Ansteuereinrichtung (20), insbesondere durch einen rotatorischen Antrieb von zumindest einer Ansteuereinheit (21), insbesondere von zumindest einem Rotationskörper (23), bevorzugt eines äußeren Ventilsegments (05).

5. Mehrwegventil nach Anspruch 1,
**dadurch gekennzeichnet,**
**dass** über eine Nocke des Nockenwellensegments (19) das Stellelement (18) abhängig von einer Winkelstellung des Nockenwellensegments (19), insbesondere translatorisch, bewegbar ist und bevorzugt die Ventilstelleinrichtung (17) derart mit dem Stellelement (18) zusammenwirkt, dass zumindest mittelbar durch die Bewegung des Stellelements (18) die Ventilstelleinrichtung (17) zwischen der Öffnungsposition und der Verschlussposition bewegbar ist.

6. Mehrwegventil nach Anspruch 1,
**dadurch gekennzeichnet,**
**dass** die Nockenwellensegmente (19) in axialer Richtung (A) auf gegenüberliegenden Seiten komplementär zueinander ausgebildete Kupplungskonturen, insbesondere Vielkantkonturen, aufweisen.

7. Mehrwegventil nach Anspruch 1 oder 6,
**dadurch gekennzeichnet,**
**dass** die mechanische Ansteuereinheit (21) derart im Ventilsegmentgehäuse (07), insbesondere drehbar, angeordnet und/oder gelagert ist, dass eine erste hervorstehende Kupplungskontur aus dem Ventilsegmentgehäuse (07) herausragt und bevorzugt eine zweite, axial gegenüberliegende, vertiefte Kupplungskontur innerhalb des Ventilsegmentgehäuses (07) angeordnet ist.

8. Mehrwegventil nach einem der Ansprüche 1 oder 5 bis7,
**dadurch gekennzeichnet,**
**dass** ein Teil der Ventilstelleinrichtung (17), insbesondere in einem Bereich mit geringem Durchmesser, eine metallische, bevorzugt gesinterte, Struktur umfasst.

9. Mehrwegventil nach einem der Ansprüche 1 oder 6 bis 8,
**dadurch gekennzeichnet,**
**dass** die Ventilstelleinrichtung (17) zumindest ein Dichtelement, (24), bevorzugt eine Ringdichtung, umfasst, wobei das zumindest eine Dichtelement (24) so angeordnet und ausgestaltet ist, dass in der zumindest einen Öffnungsposition ein Fluidkanal von zumindest der Ventilhauptleitung (15) zu zumindest einem gesteuerten Fluidauslass (04) des Ventilsegments (05) erzeugt und/oder freigegeben wird.

10. Mehrwegventil nach einem der Ansprüche 1 bis 9,
**dadurch gekennzeichnet,**
**dass** zwischen jeweils einem nicht gesteuerten Fluidauslass (13) eines Ventilsegments (05) und einem Fluideinlass (14) eines nachfolgenden Ventilsegments (05), welche eine sich an den Fluideingang (03) des Ventils anschließende Ventilhauptleitung (15) ausbilden, ein Segmentdichtelement zur Abdichtung der Ventilhauptleitung (15) zwischen den Ventilsegmenten (05) angeordnet ist.

11. Mehrwegventil nach einem der Ansprüche 1 bis 10,
**dadurch gekennzeichnet,**
**dass** die Ventilsegmentgehäuse (07) mechanische Kopplungsmittel (08), bevorzugt Verbindungsausnehmungen (09) zur Aufnahme eines Kopplungsbolzens (10), aufweisen, um die Ventilsegmentgehäuse (07), bevorzugt unmittelbar, miteinander zu verbinden.

12. Mehrwegventil nach einem der Ansprüche 1 bis 11,
**dadurch gekennzeichnet,**
**dass** das Mehrwegventil (01) zumindest ein Eingangs-Ventilsegment (05.2) umfasst,
welches einen Fluideinlass (03) als nicht gesteuerter Fluideingang (03) zum Anschluss an eine externe Fluidquelle;
einen Fluidauslass (13) als nicht gesteuerter Fluidverbindungsausgang zur Verbindung mit einem Fluideinlass (14) eines nachfolgenden Ventilsegments (05) und
einen Fluidauslass (04) als mit der Ventilstelleinrichtung (17) gesteuerten Fluidauslass (04) umfasst.

13. Mehrwegventil nach einem der Ansprüche 1 bis 12,
**dadurch gekennzeichnet,**
**dass** das Mehrwegventil (01) zumindest ein Mittel-Ventilsegment (05.1) umfasst,
welches
einen Fluideinlass (14) als nicht gesteuerten Fluidverbindungseingang zur Verbindung mit einem vorhergehenden Ventilsegment (05); einen Fluidauslass (13) als nicht gesteuerten Fluidverbindungsausgang zur Verbindung mit einem Fluideinlass (14) eines nachfolgenden Ventilsegments (05)
und
einen Fluidauslass (04) als mit der Ventilstelleinrichtung (17) gesteuerten Fluidauslass (04) umfasst.

14. Mehrwegventil nach einem der Ansprüche 1 bis 13,
**dadurch gekennzeichnet,**
**dass** das Mehrwegventil (01) zumindest ein End-Ventilsegment (05.3) umfasst, welches
einen Fluideinlass (14) als nicht gesteuerten Fluidverbindungseingang zur Verbindung mit einem vorhergehenden Ventilsegment (05) und
einen Fluidauslass (04) als mit der Ventilstelleinrichtung (17) gesteuerten Fluidauslass (04) umfasst.

15. Mehrfluid-Mehrwegeventil, umfassend zumindest zwei Mehrwegventile (01) nach einem der Ansprüche 1 bis 14,
**dadurch gekennzeichnet,**
**dass** die zumindest zwei Mehrwegventile (01) derart miteinander verbunden sind, dass die mechanischen Ansteuereinheiten (22) der Ventilsegmente (05) der unterschiedlichen Mehrwegventile (01) derart miteinander verbunden, insbesondere gekoppelt, sind, dass eine gemeinsame, insbesondere eine einheitlich bewegbare, Ansteuereinrichtung (20) des Mehrfluid-Mehrwegventils gebildet wird.

16. Getränkezubereitungsvorrichtung umfassend ein Mehrwegventil (01) nach einem der Ansprüche 1 bis 14 und/oder ein Mehrfluid-Mehrwegventil nach Anspruch 15.

## Claims

1. A multiway valve (01) for fluids, in particular water and/or water steam, for a beverage preparation device, the multiway valve (01) comprising a fluid opening (02) for the fluid designed as a fluid inlet (03) and a plurality of fluid openings (02) for the fluid designed as controlled fluid outlets (04),
a plurality of modular valve segments (05) each having a fluid inlet (14), a controlled fluid outlet (04) and a non-controlled fluid outlet (13) and a valve positioning device (17) controlling a controlled fluid outlet (04), the valve positioning device (17) being displaceable between at least one opening position and at least one closing position by a mechanical control unit (21) and preferably being disposed in a valve segment casing (07) and the modular valve segment (05), in particular also the valve segment casings (07), being connected to each other in such a manner that a valve main line (15) connected to the fluid inlet (03) of the valve is formed via a non-controlled fluid outlet (13) of a valve segment (05) and a fluid inlet (14) of a subsequent valve segment (05), respectively,
the mechanical control units (21) being connected to, in particular coupled with, each other in such a manner to control the modular valve segments (05) and/or valve positioning devices (17) that a shared, in particular unitarily movable, control device (20) of the multiway valve (01) is formed,
**characterized in that**
the mechanical control unit (21) comprises a cam shaft segment (19) and a positively driven positioning element (18).

2. The multiway valve according to claim 1,
**characterized in that**
all controlled fluid outlets (04), preferably including the fluid inlet (03) of the multiway valve (01) are disposed on one side of a valve casing (30) and preferably at least sections thereof, in particular ones abutting against the valve casing (30), extend in the same direction starting from the valve casing (30).

3. The multiway valve according to any one of the claims 1 to 2,
**characterized in that**
the mechanical control units (21) comprise a rotation body (23), in particular for at least indirectly displacing the valve positioning device (17), the rotation bodies (23) having a rotation axis (A), preferably all rotation axes (A) of the rotation bodies (23) extending along a shared rotation axis (A) of the control device (20).

4. The multiway valve according to any one of the claims 1 to 3,
**characterized by**
a mechanical drive unit (11) for driving the control device (20), in particular via a rotatory drive of at least one control unit (21), in particular of at least one rotation body (23), preferably of an outer valve segment (05).

5. The multiway valve according to claim 1,
**characterized in that**
the positioning element (18) is movable, in particular translationally, via a cam of the cam shaft segment (19) independently of the angularity of the cam shaft segment (19) and preferably the valve positioning device (17) interacts in such a manner with the positioning element (18) that the valve positioning device (17) is movable between the opening position and the closing position at least indirectly via the movement of the positioning element (18).

6. The multiway valve according to claim 1,
**characterized in that**
the cam shaft segments (19) have coupling contours, in particular polygonal contours, which are formed complementary in shape to each other on opposite sides in the axial direction (A).

7. The multiway valve according to any one of the claims 1 to 6,
**characterized in that**
the mechanical control unit (21) is disposed and/or mounted, in particular pivotally, in such a manner in the valve segment casing (07) that a first protruding coupling contour protrudes from the valve segment casing (07) and preferably a second recessed coupling contour disposed axially opposite is disposed in the valve segment casing (07).

8. The multiway valve according to any one of the claims 1 or 5 to 7,
**characterized in that**
a part of the valve positioning device (17) has a metallic, preferably sintered, structure, in particular in an area having a small diameter.

9. The multiway valve according to any one of the claims 1 or 6 to 8,
**characterized in that**
the valve positioning device comprises at least one sealing element (24), preferably a ring seal, the at least one sealing element (24) being disposed and designed such that a fluid channel from at least the valve main line (15) to at least one controlled fluid outlet (04) of the valve segment (05) is established and/or cleared in the at least one opening position.

10. The multiway valve according to any one of the claims 1 to 9,
**characterized in that**
a segment sealing element for sealing the valve main line (15) is disposed between the valve segments (05) between all non-controlled fluid outlets (13) of a valve segment (05) and fluid inlets (14) of a subsequent valve segment (05) in each instance, the fluid inlets (14) forming a valve main line (15) connected to the fluid inlet (03) of the valve.

11. The multiway valve according to any one of the claims 1 to 10,
**characterized in that**
the valve segment casings (07) have mechanical coupling means (08), preferably connective recesses (09) for housing a coupling bolt (10), in order to connect the valve segment casings (07), preferably directly, to each other.

12. The multiway valve according to any one of the claims 1 to 11,
**characterized in that**
the multiway valve (01) comprises at least one inlet valve segment (05.2) which comprises a fluid inlet (03) as a non-controlled fluid inlet (03) for being connected to an external fluid source; a fluid outlet (13) as a non-controlled fluid connection outlet for being connected to a fluid inlet (14) of a subsequent valve segment (05); and a fluid outlet (04) as a fluid outlet (04) controlled by the valve positioning device (17).

13. The multiway valve according to any one of the claims 1 to 12,
**characterized in that**
the multiway valve (01) comprises at least one middle valve segment (05.1) which comprises a fluid inlet (14) as a non-controlled fluid connection inlet for being connected to a preceding valve segment (05); a fluid outlet (13) as a non-controlled fluid connection outlet for being connected to a fluid outlet (14) of a subsequent valve segment (05); and a fluid outlet (04) as a fluid outlet (04) controlled by the valve positioning device (17).

14. The multiway valve according to any one of the claims 1 to 13,
**characterized in that**
the multiway valve (01) comprises at least one end valve segment (05.3) which comprises a fluid inlet (14) as a non-controlled fluid connection inlet for being connected to a preceding valve segment (05) and a fluid outlet (04) as a fluid outlet (04) controlled by the valve positioning device (17).

15. A multifluid multiway valve, comprising at least two multiway valves (01) according to any one of the claims 1 to 14,
**characterized in that**
the at least two multiway valves (01) are connected in such a manner to each other that the mechanical control units (22) of the valve segments (05) of the different multiway valves (01) are connected to, in particular coupled with, each other in such a manner that a shared control device (20) of the multifluid multiway valve, in particular unitarily movable, is formed.

16. A beverage preparation device comprising a multiway valve (01) according to any one of the claims 1 to 14 and/or a multifluid multiway valve according to claim 15.

## Revendications

1. Soupape (01) à plusieurs voies pour des fluides, notamment de l'eau et/ou du vapeur de l'eau, pour un dispositif à préparation de boisson, la soupape (01) à plusieurs voies comprenant une ouverture de fluide (02) pour le fluide désignée comme entrée de fluide (03) et une pluralité d'ouvertures de fluide (02) pour le fluide désignées comme sorties de fluide (04) contrôlées,
une pluralité de sections de soupape (05) modulaires ayant chacune une entrée de fluide (14), une sortie de fluide (04) contrôlée et une sortie de fluide (13) non-contrôlée et un dispositif (17) de positionnement de soupape contrôlant une sortie de fluide (04) contrôlée, le dispositif (17) de positionnement de soupape pouvant être déplacé entre au moins une position ouverte et au moins une position de verrouillage par une unité de contrôle (21) mécanique et de préférence étant disposé dans une boîte (07) de section de soupape, et les sections de soupape (05) modulaire, notamment incluant les boîtes (07) de section de soupape, étant reliées les unes aux autre de telle manière qu'une ligne principale (15) de soupape reliée à l'entrée de fluide (03) de la soupape est formée par une sortie de fluide (13) non-contrôlée d'une section de soupape (05) et par une entrée de fluide (14) d'une section de soupape (05) suivante,
les unités de contrôle (21) mécaniques étant reliées, notamment couplées, les unes aux autres pour contrôler les sections de soupape (05) modulaires et/ou le dispositif (17) de positionnement de soupapes de telle manière qu'un dispositif de contrôle (20) commun de la soupape (01) à plusieurs voies est formé, notamment le dispositif de contrôle (20) pouvant être bougé unitairement,
**caractérisée en ce que**
l'unité de contrôle (21) mécanique comprend une section (19) à arbre à cames et un élément de positionnement (18) à guidage forcé.

2. Soupape à plusieurs voies selon la revendication 1,
**caractérisée en ce que**
toutes les sorties de fluide (04) contrôlées, de préférence incluant l'entrée de fluide (03), de la soupape (01) à plusieurs voies sont disposées sur un côté d'une boîte de soupape (30) et de préférence au moins des sections de celles-ci s'étendent dans un sens commun à partir de la boîte de soupape (30), notamment ces sections qui sont à proximité de la boîte de soupape (30).

3. Soupape à plusieurs voies selon l'une quelconques des revendications 1 à 2,
**caractérisée en ce que**
les unités de contrôle (21) mécaniques comprennent un corps de rotation (23), notamment pour au moins le déplacement indirect du dispositif (17) de positionnement de soupape, les corps de rotation (23) comprenant un axe de rotation (A), de préférence tous les axes de rotation (A) de corps de rotation (23) s'étendant le long un axe de rotation (A) commun du dispositif de contrôle (20).

4. Soupape à plusieurs voies selon l'une quelconques des revendications 1 à 3,
**caractérisée par**
une unité d'entraînement (11) mécanique pour l'entraînement du dispositif de contrôle (20), notamment par un entraînement rotatif d'au moins une unité de contrôle (21), notamment d'au moins un corps de rotation (23), de préférence d'une section de soupape (05) extérieure.

5. Soupape à plusieurs voies selon la revendication 1,
**caractérisée en ce que**
l'élément de positionnement (18) peut être bougé, notamment de manière translationnelle, par une came de la section (19) à arbre à cames indépendamment de l'angularité de la section (19) à arbre à cames, et de préférence le dispositif (17) de positionnement de soupape interagit avec l'élément de positionnement (18) de telle manière que le dispositif (17) de positionnement de soupape peut être bougé entre la position ouverte et la position de verrouillage au moins indirectement par le mouvement de l'élément de positionnement (18).

6. Soupape à plusieurs voies selon la revendication 1,
**caractérisée en ce que**
les sections (19) à arbre à cames ont des contours de couplage, notamment des contours polygonaux, qui sont complémentaires dans leur forme sur des côtés opposés dans le sens axial (A).

7. Soupape à plusieurs voies selon l'une quelconques des revendications 1 à 6,
**caractérisée en ce que**
l'unité de contrôle (21) mécanique est disposée et/ou montée, notamment de manière pivotée, dans la boîte (07) de section de soupape de telle manière qu'un premier contour de couplage est en saillie de la boîte (07) de section de soupape et de préférence un deuxième contour de couplage creusé disposé opposé axialement est disposé dans la boîte (07) de section de soupape.

8. Soupape à plusieurs voies selon l'une quelconques des revendications 1 ou la revendication 5 à 7,
**caractérisée en ce**
**qu'**une partie du dispositif (17) de positionnement de soupape a une structure métallique, de préférence frittée, notamment dans une zone ayant un petit diamètre.

9. Soupape à plusieurs voies selon l'une quelconques des revendications 1 ou la revendication 6 à 7,
**caractérisée en ce que**
le dispositif (17) de positionnement de soupape comprend au moins un élément d'étanchéité (24), de préférence une bague étanche, l'au moins un élément d'étanchéité (24) étant disposé et désigné de sorte qu'un canal de fluide à partir d'au moins la ligne principale (15) de soupape à au moins une sortie de fluide (04) contrôlée de la section de soupape (05) est établi et/ou déclenché dans l'au moins une position ouverte.

10. Soupape à plusieurs voies selon l'une quelconques des revendications 1 à 9,
**caractérisée en ce**
**qu'**une section d'élément d'étanchéité pour étancher la ligne principale (15) de soupape est disposée entre les sections de soupape (05) entre toutes les sorties de fluide (13) non-contrôlées de la section de soupape (05) et toutes les entrées de fluide (14) d'une section de soupape (05) suivante en chaque cas, qui forment une ligne principale (15) de soupape reliée à l'entrée de fluide (03) de la soupape.

11. Soupape à plusieurs voies selon l'une quelconques des revendications 1 à 10,
**caractérisée en ce que**
les boîtes (07) de section de soupape ont des moyens de couplage (08) mécaniques, de préférence des évidements de connexion (09) pour accueillir un boulon de couplage (10), afin de relier les boîtes (07) de section de soupape les unes aux autres, de préférence directement.

12. Soupape à plusieurs voies selon l'une quelconques des revendications 1 à 11,
**caractérisée en ce que**
la soupape (01) à plusieurs voies comprend au moins une section (05.2) de soupape d'entrée qui comprend une entrée de fluide (03) comme entrée de fluide (03) non-contrôlée pour être reliée à une source de fluide extérieure ; une sortie de fluide (13) comme sortie de connexion de fluide non-contrôlée pour être reliée à une sortie de fluide (14) d'une section de soupape (05) suivante ; et une sortie de fluide (04) comme sortie de fluide (04) contrôlée par le dispositif (17) de positionnement de soupape.

13. Soupape à plusieurs voies selon l'une quelconques des revendications 1 à 12,
**caractérisée en ce que**
la soupape (01) à plusieurs voies comprend au moins une section (05.1) de soupape moyen qui comprend une entrée de fluide (14) comme entre de connexion de fluide non-contrôlée pour être reliée à une section de soupape (05) précédente ; une sortie de fluide (13) comme sortie de connexion de fluide non-contrôlée pour être reliée à une sortie de fluide (14) d'une section de soupape (05) suivante ; et une sortie de fluide (04) comme sortie de fluide (04) contrôlée par le dispositif (17) de positionnement de soupape.

14. Soupape à plusieurs voies selon l'une quelconques des revendications 1 à 13,
**caractérisée en ce que**
la soupape (01) à plusieurs voies comprend au moins une section (05.3) de soupape finale qui comprend une entrée de fluide (14) comme entrée de connexion de fluide non-contrôlée pour être reliée à une section de soupape (05) précédente et une sortie de fluide (04) comme sortie de fluide (04) contrôlée par le dispositif (17) de positionnement de soupape.

15. Soupape à plusieurs voies à plusieurs fluides, comprenant au moins deux soupapes à plusieurs voies (01) selon l'une quelconque des revendications 1 à 14,
**caractérisée en ce que**
les au moins deux soupapes à plusieurs voies (01) sont reliés l'un à l'autre de telle manière que les unités de contrôle (22) mécaniques de sections de soupape (05) de soupapes à plusieurs voies (01) différentes sont reliées, notamment couplées, les unes aux autres de telle manière qu'un dispositif de contrôle (20) commun de la soupape à plusieurs voies à plusieurs fluides est formé, notamment le dispositif de contrôle (20) pouvant être bougé unitairement.

16. Dispositif à préparation de boisson comprenant une soupape (01) à plusieurs voies selon l'une quelconque des revendications 1 à 14 et/ou une soupape à plusieurs voies à plusieurs fluides selon la revendication 15.
